# EUROPEAN PATENT APPLICATION

(11) **EP 4 790 535 A1**
(43) Date of publication of application: **12.08.2026**
(21) Application number: 24809536.6
(22) Date of filing: 29.09.2024
(51) Int. Cl.: G06F 3/06

(54) **DATA STORAGE METHOD, APPARATUS AND DEVICE**

(71) Applicant: New H3C Information Technologies Co., Ltd., Zhejiang 310056 (CN)
(72) Inventor: ZHANG, Dinghong, Beijing 100102 (CN)
(74) Representative: 2SPL Patentanwälte PartG mbB
(86) International application number: PCT/CN2024/122503
(87) International publication number: WO 2026/065309

(57) **Abstract**

The present disclosure provides a data storage method, apparatus and device. According to the method, a data storage request comprising directory information is obtained. Based on the directory information, a target index structure is determined, where the target index structure includes multi-level inodes corresponding to multi-level directories in the directory information. For each inode, if the inode is not a last-level inode of the multi-level inodes, metadata of the inode comprises storage location information of a next-level inode of the inode, and if the inode is a last-level inode, the metadata of the inode comprises storage location information of to-be-stored data. Based on the storage location information of the inode, the metadata of the inode is stored. Based on the storage location information of the to-be-stored data, the to-be-stored data is stored. According to the scheme of the present disclosure, intercommunications between the object storage protocol and the distributed file storage protocol are realized.

## Description

### TECHNICAL FIELD

The present disclosure relates to the field of communications, and in particular, to a data storage method, apparatus and device.

### BACKGROUND

Unstructured data is data that has an irregular or incomplete data structure, that has no predefined data model and that cannot be stored using database logical tables. Unstructured data includes social media content, images, audio, video, text, Hyper Text Markup Language (HTML), various reports and so on. Object storage and distributed file storage can be used to store unstructured data.

Object storage is a method that uses object as a basic storage unit and stores data and metadata in an associated way. Object storage provides flexibility to store unstructured data with high scalability and reliability. For example, Simple Storage Service (S3) protocol is an object storage service. The S3 protocol defines access and management of object storage, and enables the storage of unstructured data.

Distributed file storage is a way to store unstructured data on multiple nodes. For example, Network File System (NFS) protocol and Common Internet File System (CIFS) protocol are network file system protocols for distributed file storage, for sharing and accessing file data in a distributed environment. NFS allows a remote system to access remote files in a local file system manner, providing capability of transparent file access. CIFS allows files and printers to be shared between devices with different operating systems, providing powerful access control, encryption, and authentication functions.

### SUMMARY

The present disclosure provides a data storage method, which includes:
obtaining a data storage request including directory information, where in a case that the data storage request is based on an object storage protocol, the directory information includes a uniform resource locator; in a case that the data storage request is based on a distributed file storage protocol, the directory information includes a file path;
determining a target index structure based on the directory information, where the target index structure includes multi-level inodes corresponding to multi-level directories in the directory information; where for each inode, in response to that the inode is not a last-level inode of the multi-level inodes, metadata of the inode includes storage location information of a next-level inode of the inode, and in response to that the inode is a last-level inode of the multi-level inodes, the metadata of the inode includes storage location information of to-be-stored data;
for each inode, storing the metadata of the inode based on the storage location information of the inode; storing the to-be-stored data based on the storage location information of the to-be-stored data.

The present disclosure provides a data storage apparatus, the apparatus including:
an obtaining module, which is to obtain a data storage request including directory information, where in a case that the data storage request is based on an object storage protocol, the directory information includes a uniform resource locator; in a case that the data storage request is based on a distributed file storage protocol, the directory information includes a file path;
a determining module, which is to determine a target index structure based on the directory information, where the target index structure includes multi-level inodes corresponding to multi-level directories in the directory information, where for each inode, in response to that the inode is not a last-level inode of the multi-level inodes, metadata of the inode includes storage location information of a next-level inode of the inode, and in response to that the inode is a last-level inode of the multi-level inodes, the metadata of the inode includes storage location information of to-be-stored data;
a storage module, which is to, for each inode, store the metadata of the inode based on the storage location information of the inode; store the to-be-stored data based on the storage location information of the to-be-stored data.

The present disclosure provides an electronic device including a processor and a machine-readable storage medium storing machine-executable instructions capable of being executed by the processor; where the processor is to execute the machine-executable instructions to perform the data storage method in the above examples.

The present disclosure provides a computer program product including a computer program that, when executed by a processor, causes the processor to perform the data storage method of the above examples.

The present disclosure provides a machine-readable storage medium storing machine-executable instructions capable of being executed by a processor; where the processor is to execute the machine-executable instructions to perform the data storage method in the above examples.

As can be seen from the above technical solutions, in the examples of the present disclosure, the intercommunications between an object storage protocol and a distributed file storage protocol can be realized, the storage of data by using an object storage protocol and a distributed file storage protocol is supported, and the access of the object storage protocol to the data stored through the distributed file storage protocol is supported, as well as the access of the distributed file storage protocol to the data stored through the object storage protocol. When different protocols access each other, the semantic loss and performance decay are reduced, and the space utilization is maximized. The data can be intercommunicated among different protocols, so that a user can see the same data when access the data using different protocols. Such data intercommunication simplifies data management and data sharing and reduces the problem of data silos. Seamless data access and sharing allows users to switch between different protocols without worrying about data inconsistency, and changes of data can be reflected in the access paths of all protocols in real time. Since there is no need to maintain multiple independent storage systems for different protocols, the cost of hardware, software and operation and maintenance can be significantly reduced, and administrators can manage storage resources more efficiently.

### BRIEF DESCRIPTION OF DRAWINGS

FIG. 1 is a schematic flowchart of a data storage method according to an example of the present disclosure.
Fig. 2 is a schematic diagram of an application scenario of artificial intelligence according to an example of the present disclosure.
FIG. 3 is a schematic diagram of an architecture of a data storage system according to an example of the present disclosure.
Fig. 4 is a schematic diagram of determining an index structure based on multi-level directories according to an example of the present disclosure.
FIG. 5 is a schematic diagram of an identification of a target version according to an example of the present disclosure.
FIG. 6 is a schematic structural diagram of a data storage apparatus according to an example of the present disclosure.
FIG. 7 is a hardware structure diagram of an electronic device according to an example of the present disclosure.

### DETAILED DESCRIPTION

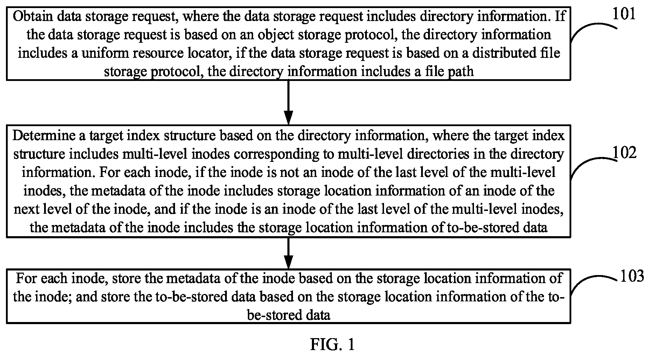

A data storage method provided in examples of the present disclosure may be applied to an electronic device, which may be any type of device. Referring to FIG. 1, which is a schematic flow chart of the method, the method includes the following blocks.

In block 101, a data storage request is obtained, where the data storage request includes directory information. If the data storage request is based on an object storage protocol, the directory information includes a uniform resource locator, and if the data storage request is based on a distributed file storage protocol, the directory information includes a file path.

In block 102, a target index structure is determined based on the directory information, where the target index structure includes multi-level inodes (index nodes) corresponding to multi-level directories in the directory information. For each inode, if the inode is not an inode of the last level of the multi-level inodes, the metadata of the inode includes storage location information of an inode of the next level of the inode, and if the inode is an inode of the last level of the multi-level inodes, the metadata of the inode includes the storage location information of to-be-stored data.

In block 103, for each inode, the metadata of the inode is stored based on the storage location information of the inode (for example, the metadata is stored in a location of a disk corresponding to the storage location information); and the to-be-stored data is stored based on the storage location information of the to-be-stored data (for example, the to-be-stored data is stored in a location of a disk corresponding to the storage location information).

In an example, if the directory information includes a file path, the file path is divided into multi-level directories based on first delimiters in the file path; or if the directory information includes a uniform resource locator, the uniform resource locator is divided into multi-level directories based on second delimiters in the uniform resource locator; where characters after each second delimiter in the uniform resource locator correspond to a directory, and the second delimiter is "/".

In an example, if a uniform resource locator in a storage request of an object storage protocol and a file path in a storage request of a distributed file storage protocol correspond to same multi-level directories, the uniform resource locator and the file path correspond to a same target index structure, where the to-be-stored data is unstructured data; the object storage protocol includes a simple storage service protocol, and the distributed file storage protocol includes at least one of a network file system protocol, a common Internet file system protocol and a portable operating system interface of UNIX protocol.

In an example, after the to-be-stored data is stored based on the storage location information of the to-be-stored data, a data read request may also be obtained, and the data read request may include directory information, where if the data read request is based on an object storage protocol, the directory information may include a uniform resource locator; if the data read request is based on a distributed file storage protocol, the directory information may include a file path. Multi-level inodes corresponding to the multi-level directories in the directory information are determined. For each inode, metadata of the inode is read based on the storage location information of the inode; if the inode is not a last-level inode of the multi-level inodes, the storage location information of an inod of a next level of the inode is determined based on the metadata of the inode; if the inode is a last-level inode of the multi-level inodes, the storage location information of stored data may be determined based on the metadata of the inode, and the stored data may be read based on the storage location information.

In an example, if an interface create request based on a distributed file storage protocol is obtained, a new inode is added to the target index structure based on the interface create request; if an interface delete request based on a distributed file storage protocol is obtained, an existing inode is deleted from the target index structure based on the interface delete request; if a hard link interface request based on a distributed file storage protocol is obtained, a new inode is added to the target index structure, and the new inode is pointed to an existing inode; if a soft link interface request based on a distributed file storage protocol is obtained, a new inode is added to the target index structure, and metadata of the new inode includes a string pointing to an arbitrary path; if an interface write request based on a distributed file storage protocol is obtained, data is written to an offset address specified by an inode of the target index structure based on the interface write request; and if an interface read request based on a distributed file storage protocol is obtained, data is read from an offset address specified by an inode of the target index structure based on the interface read request.

In an example, if an interface read request based on an object storage protocol is obtained, multi-level inodes are determined based on the interface read request. For each inode, metadata of the inode is obtained; if the inode is a last-level inode of the multi-level inodes, and the interface read request is determined to be used for reading a hard link file based on the metadata of the inode, storage location information of stored data is determined based on the metadata of the inode, and the stored data is read based on the storage location information; or if the inode is a last-level inode of the multi-level inodes, and the interface read request is determined to be used for reading a soft link file based on the metadata of the inode, path information of the soft-link file is determined based on the metadata of the inode, and a new inode is queried according to the path information of the soft link file, and storage location information of the stored data is determined based on metadata of the new inode, and the stored data is read based on the storage location information.

In an example, if a ListObjects request based on an object storage protocol is obtained, where the ListObjects request is used for listing all objects in a bucket, or the ListObjects request is used for filtering or grouping all objects in the bucket according to a prefix and a delimiter, multi-level inodes corresponding to the bucket are determined based on the ListObjects request; for each inode, metadata of the inode is obtained, and metadata of the multi-level inodes corresponding to the bucket is returned to the client in a specified order. Where metadata of the multi-level inodes is stored according to the specified order; and the metadata of the multi-level inodes corresponding to the bucket is obtained according to the specified order, where the specified order includes a lexicographic order, and the lexicographic order is arranged according to alphabetic order.

In an example, if a multipart upload request based on an object storage protocol is obtained, multi-level inodes are determined based on the multipart upload request; for each inode, metadata of the inode is obtained; if the inode is a last-level inode of the multi-level inodes, the storage location information of to-be-stored data is determined based on the metadata of the inode; data blocks in the multipart upload request are stored based on the storage location information of to-be-stored data, where the to-be-stored data includes a plurality of parts (a part in a Multipart), and for each part, the part includes at least one data block; after a data block in the multipart upload request is stored, extended data is added into the metadata of the inode, where the extended data includes a part identification of a part to which the data block belongs, an overwrite identification of the part, a block identification of the data block, and a size of the data block; and the overwrite identification of a part represents a number of repetitions of the part.

In an example, if a read request based on a distributed file storage protocol or a get request based on an object storage protocol is obtained, multi-level inodes are determined based on the read request or the get request. For each inode, metadata of the inode is obtained. If the inode is a last-level inode of the multi-level inodes, a target part identification of a to-be-read part is obtained based on the read request or the get request; a maximum overwrite identification corresponding to the target part identification is determined based on the metadata of the inode, and target extended data corresponding to the target part identification and the maximum overwrite identification is determined from the metadata of the inode; and an offset (offset address) and a len (length) of the to-be-read part are determined based on a sorting position of the target extended data and the sizes of data blocks in the target extended data.

Storage location information corresponding to the to-be-read part is determined based on the metadata of the inode, and the to-be-read part is obtained based on the storage location information, the offset, and the len.

In an example, if a truncate operation request based on a distributed file storage protocol is obtained, multi-level inodes are determined based on the truncate operation request. For each inode, metadata of the inode is obtained. If the inode is a last-level inode of the multi-level inodes, extended data of a plurality of parts may be determined from the metadata of the inode, and the plurality of parts are sorted based on the extended data; and a to-be-truncated part is determined based on the sorted results and a truncate size in the truncate operation request.

The offset and the len of the to-be-truncated part may be determined based on the sorting position of extended data of the to-be-truncated part and the size of each data block in the to-be-truncated part.

Based on the metadata of the inode, the storage location information corresponding to the to-be-truncated part is determined, and based on the storage location information, the offset, and the len, a clearing operation is performed on the to-be-truncated part.

In an example, for each inode, when first metadata of a current version is generated for the inode, a latest version identification may be generated for the first metadata, and the latest version identification is added to the first metadata. If the inode already corresponds to a second metadata of a historical version, a snapshot identification may be generated for the second metadata, where the snapshot identification may be a negative value, the snapshot identification is added to the second metadata, an identification of a target version is generated for the second metadata, and the identification of the target version is added to the second metadata; where the identification of the target version may include a first random character, a target ordered character and a second random character, the target ordered character is obtained by performing an encryption operation on an initial ordered character and the first random character, and the initial ordered character is obtained by operating on an initial ordered character of metadata of a previous version.

As can be seen from the above technical solutions, in the examples of the present disclosure, the intercommunications between an object storage protocol and a distributed file storage protocol can be realized, the storage of data by using an object storage protocol and a distributed file storage protocol is supported, and the access of the object storage protocol to the data stored through the distributed file storage protocol is supported, as well as the access of the distributed file storage protocol to the data stored through the object storage protocol. When different protocols access each other, the semantic loss and performance decay are reduced, and the space utilization is maximized. The data can be intercommunicated among different protocols, so that a user can see the same data when access the data using different protocols. Such data intercommunication simplifies data management and data sharing and reduces the problem of data silos. Seamless data access and sharing allows users to switch between different protocols without worrying about data inconsistency, and changes of data can be reflected in the access paths of all protocols in real time. Since there is no need to maintain multiple independent storage systems for different protocols, the cost of hardware, software and operation and maintenance can be significantly reduced, and administrators can manage storage resources more efficiently.

The data storage method in the examples of the present disclosure is described in combination with specific application scenarios in the following.

In order to realize the storage of unstructured data, object storage and distributed file storage can be adopted. For example, the object storage may include S3 protocol, and the distributed file storage may include NFS protocol, CIFS protocol and Portable Operating System Interface of UNIX (POSIX) protocol.

In order to store unstructured data, multiple independent storage systems need to be maintained. For example, a storage system 1 is maintained for S3 protocol, a storage system 2 is maintained for NFS protocol, and so on. For a storage request or a read request of S3 protocol, data storage or data read is performed based on the storage system 1. For a storage request or a data read request of NFS protocol, data storage or data read is performed based on the storage system 2.

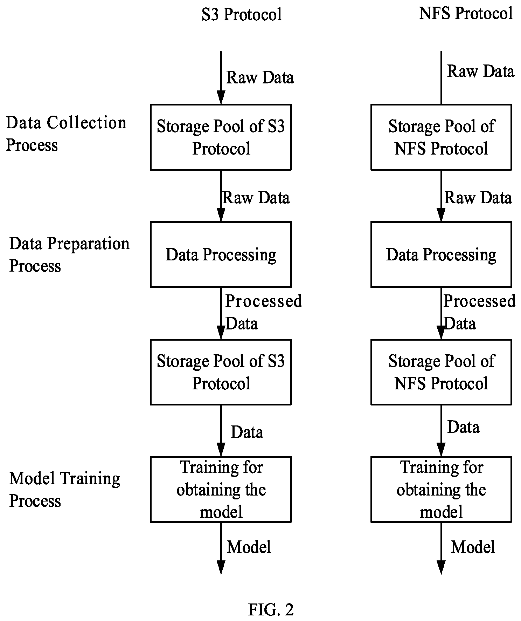

In an example, artificial intelligence (AI) relies on unstructured data for training and inferencing to understand and analyze information such as text, images, and audio, etc. Referring to Fig. 2, which is a schematic diagram of an application scenario of artificial intelligence, artificial intelligence involves a data collection process, a data preparation process, a model training process, and an inferencing process.

In the data collection process, it is necessary to collect raw data from a large number of devices, involving the use of a variety of protocols to collect raw data. For example, S3 protocol is used to collect raw data, and the raw data is stored in a storage pool of S3 protocol; the NFS protocol is used to collect raw data, and the raw data is stored in a storage pool of NFS protocol.

In the data preparation process, it is necessary to read the raw data from the storage pools and process the raw data, such as labeling, desensitization, anonymization, cleaning, etc. Based on this, multiple protocols need to be supported to implement the data preparation process. For example, S3 protocol is adopted to read the raw data from the storage pool of S3 protocol, the raw data is processed, and the processed data is stored in the storage pool of S3 protocol. The NFS protocol is adopted to read the raw data from the storage pool of NFS protocol, the raw data is processed, and the processed data is stored in the storage pool of NFS protocol. Once a certain protocol, such as S3 protocol, is not supported, the raw data cannot be read from the storage pool of S3 protocol and cannot be processed.

In the model training process, it is needed to read data from the storage pools and get a model based on data training. Based on this, it is necessary to support multiple protocols to achieve the model training process. For example, S3 protocol is adopted to read data from the storage pool of S3 protocol, NFS protocol is adopted to read data from the storage pool of NFS protocol, and the model is obtained based on training of the large amount of data that has been read. Once a protocol, such the S3 protocol, is not supported, data cannot be read from the storage pool of S3 protocol, and the model cannot be trained based on the data.

In the inferencing process, the trained model can be deployed to a business cloud or a terminal, and an application reads the model of the business cloud or the terminal to inference the input data and obtain an inferencing result.

In view of the above findings, the example proposes a data storage method, which can realize the intercommunications between multiple protocols. For example, in the data collection process, S3 protocol is adopted to collect raw data and store the raw data into a same storage pool, and the NFS protocol is adopted to collect raw data and store the raw data into the same storage pool, that is, different protocols correspond to a same storage pool. In the data preparation process, the data preparation process may be implemented while only one protocol is supported. For example, S3 protocol (or NFS protocol) is adopted to read the raw data from the same storage pool, the raw data is processed, and the processed data is stored into the same storage pool. In the model training process, the model training process may be implemented while only one protocol is supported. For example, S3 protocol (or NFS protocol) is adopted to read data from the same storage pool, and the model is obtained based on training of the data.

Accordingly, multi-protocol integrated storage solutions can meet the storage and access needs of different forms of data, for example, object storage protocols (such as S3) and distributed file storage protocols (such as NFS, CIFS and POSIX) can be integrated to provide an efficient and reliable data support environment for artificial intelligence, support artificial intelligence to use unstructured data for training, and realize inferencing based on the trained model.

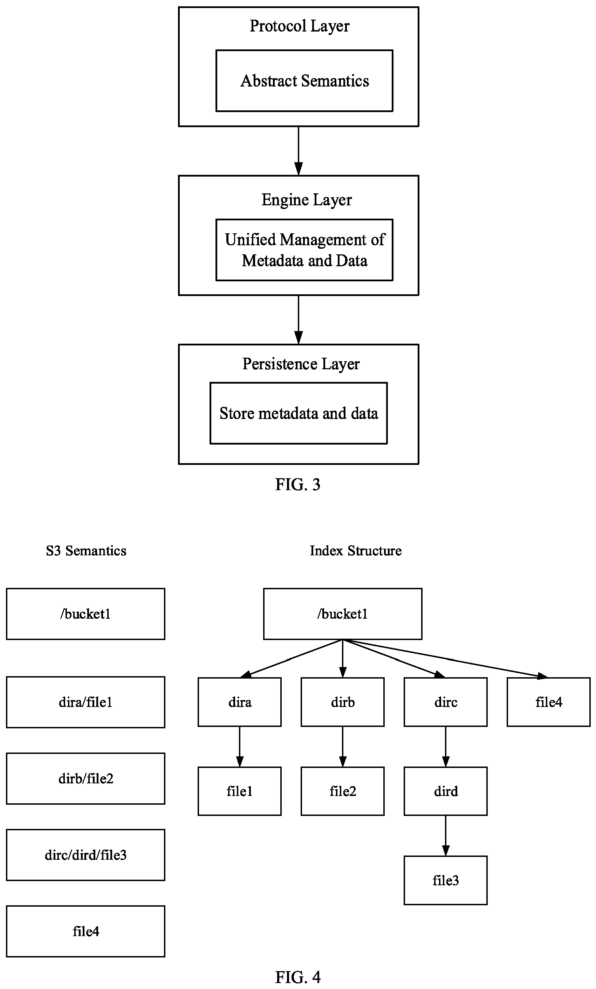

A data storage system is proposed in an example of the present disclosure, as shown in FIG. 3, which is a schematic diagram of an architecture of the data storage system. The data storage system may include a protocol layer, an engine layer, and a persistence layer.

The protocol layer is used for interfacing with various storage protocols, and is responsible for receiving and parsing requests of various storage protocols sent by the client (such as a data storage request or a data read request), determining an abstract semantic such as multi-level directories that can be recognized by the engine layer based on the request, and sending the multi-level directories to the engine layer.

In an example, the protocol layer supports a parsing module of an object storage protocol, and the parsing module is for receiving and parsing a request of the object storage protocol sent by a client and determining multi-level directories which can be recognized by the engine layer based on the request. The object storage protocol may include, but is not limited to, S3 protocol. After receiving a request of S3 protocol, the parsing module determines multi-level directories based on the request.

For example, the request of S3 protocol may include directory information, and the directory information may be a uniform resource locator (URL). Based on this, the uniform resource locator may be divided into multiple levels of directories based on the second delimiters in the URL, that is, the characters behind each second delimiter in the uniform resource locator corresponds to a directory, and the second delimiter may be "/".

For example, the semantics of the request of S3 protocol has no concept of a path, but the delimiter used in the request of S3 protocol is usually "/", and the delimiter "/" in the request of S3 protocol is consistent with the delimiter of a file path. Based on this, the uniform resource locator in a request of S3 protocol can be separated by a delimiter "/", and then the uniform resource locator is escaped into a file path without loss. In this way, the bucket of S3 protocol corresponds to a namespace, and each delimiter "/" is identified as a directory, that is, the characters after each delimiter "/" in a uniform resource locator correspond to a directory. In this way, it can be ensured that a request of S3 protocol is disassembled into multiple inodes, which is compatible with the path semantics of the file system.

For example, for a uniform resource locator in a request based on S3 protocol, the first delimiter "/" is followed by the first-level directory, the second delimiter "/" is followed by the second-level directory, and the third delimiter "/" is followed by the third-level directory, and so on. The uniform resource locator can be divided into multiple levels of directories, and the directory name of each level of directory can be obtained. The directory name of each level of directory is sent to the engine layer.

In an example, the protocol layer supports a parsing module of a distributed file storage protocol, and the parsing module is used for receiving and parsing a request of a distributed file storage protocol sent by a client and determining multi-level directories that can be recognized by the engine layer based on the request. Where the distributed file storage protocol may include, but is not limited to, NFS protocol, CIFS protocol, and POSIX protocol. These distributed file storage protocols may correspond to a same parsing module or different parsing modules. The parsing module, upon receiving a request of NFS protocol (or CIFS protocol, or POSIX protocol), determines multi-level directories based on the request.

For example, the request of NFS protocol may include directory information, and the directory information may be a file path. Based on this, the file path may be divided into multi-level directories based on the first delimiters in the file path, that is, the characters after each first delimiter in the file path correspond to a directory.

For example, the semantics of a request of NFS protocol has a path concept, that is, NFS protocol (or CIFS protocol, or POSIX protocol) includes file semantics, which can uniquely identify a certain file through the file path, and the file path has clearly indicated the directory, so the file path can be divided into multi-level directories.

For example, the first first delimiter "/" is followed by the first-level directory, the second first delimiter "/" is followed by the second-level directory, and so on. The file path can be divided into multiple levels of directories, and the directory name of each level of directory can be obtained. The directory name of each level of directory is sent to the engine layer.

The engine layer is used to process the abstract semantics (multi-level directories) and special semantics of all protocols, so that requests are made from each protocol according to the native semantics and replies to the requests are obtained without losing semantics. The engine layer also manages metadata and data. For example, after receiving multi-level directories in the directory information, the engine layer determines an index structure based on the multi-level directories, where the index structure may include multi-level inodes corresponding to the multi-level directories.

In an example, the engine layer may determine an index structure based on the multi-level directories and store the metadata and data using the index structure. Referring to Fig. 4, Fig. 4 is a schematic diagram illustrating determining an index structure based on multi-level directories. In FIG. 4, the multi-level directories are determined based on the directory information in a request of S3 protocol as an example.

In the process of data storage or data reading, the client may send a plurality of requests, each request triggers the engine layer to obtain multi-level directories, and the index structure includes multi-level inodes corresponding to the multi-level directories, that is, each directory corresponds to one inode. For example, based on the directory information in the request of S3 protocol, the first-level directory is bucket1, the second-level directory is dira, and the third-level directory is file1, the index structure may include the first-level inode bucket1 (that is, the directory name of the first-level directory is used as the name of the first-level inode. The name of the first-level inode may also be defined in other ways), the second-level inode dira (that is, the directory name of the second-level directory is used as the name of the second-level inode), and the third-level inode file1. For another example, based on the directory information in the request of S3 protocol, if the first-level directory is bucket1, the second-level directory is dirb, and the third-level directory is file2, the index structure may include the first-level inode bucket1, the second-level inode dirb, and the third-level inode file2. For another example, based on the directory information in the request of S3 protocol, if the first-level directory is bucket1, the second-level directory is dirc, the third-level directory is dird, and the fourth-level directory is file3, the index structure may include the first-level inode bucket1, the second-level inode dirc, and the third-level inode dird, and the fourth-level inode file3. For another example, based on the directory information in the request of S3 protocol, the first-level directory is bucket1 and the second-level directory is file4, the index structure may include the first-level inode bucket1 and the second-level inode file4.

Accordingly, the index structure shown in FIG. 4 can be obtained based on the multi-level directories of S3 protocol, and the index structure may include a first-level inode bucket1, second-level inodes dira, dirb, dirc and file4, third-level inodes file1, file2 and dird, and a fourth-level inode file3.

In an example, based on the index structure shown in FIG. 4, each inode may store metadata, and each inode only stores information of an inode of the next level, and does not store information of inodes of other levels across levels. For example, with respect to each inode, if the inode is not a last-level inode of the multi-level inodes, the metadata of the inode may include storage location information of a next-level inode of the inode, and if the inode is a last-level inode of the multi-level inodes, metadata of the inode may include storage location information of to-be-stored data.

For example, the storage location information of the first-level inode bucket1 may be stored in a fixed storage location, and the first-level inode bucket1 is found based on the fixed storage location, and the metadata of the first-level inode bucket1 is read. The metadata of the first-level inode bucket1 includes the storage location information of the second-level inodes dira, dirb, dirc, and file4. The second-level inode dira is found based on the storage location information of the second-level inode dira, and the metadata of the second-level inode dira is read. The second-level inode dirb is found based on the storage location information of the second-level inode dirb, and the metadata of the second-level inode dirb is read. The second-level inode dirc is found based on the storage location information of the second-level inode dirc, and the metadata of the second-level inode dirc is read. The second-level inode file4 is found based on the storage location information of the second-level inode file4, and the metadata of the second-level inode file4 is read.

The metadata of the second-level inode dira includes the storage location information of the third-level inode file1, the third-level inode file1 is found based on the storage location information of the third-level inode file1, and the metadata of the third-level inode file1 is read. The metadata of the second-level inode dirb includes the storage location information of the third-level inode file2, the third-level inode file2 is found based on the storage location information of the third-level inode file2, and the metadata of the third-level inode file2 is read. The metadata of the second-level inode dirc includes the storage location information of the third-level inode dird, the third-level inode dird is found based on the storage location information of the third-level inode dird, and the metadata of the third-level inode dird is read. The metadata of the third-level inode dird includes the storage location information of the fourth-level inode file3, the fourth-level inode file3 is found based on the storage location information, and the metadata of the fourth-level inode file3 is read.

If the second-level inode file4 is a last-level inode, the metadata of the second-level inode file4 includes the storage location information of to-be-stored data, such as a file file4, indicating the storage location of the file file4. If the third-level inode file1 is a last-level inode, the metadata of the third-level inode file1 includes the storage location information of to-be-stored data, such as a file file 1, indicating the storage location of the file file1. If the third-level inode file2 is a last-level inode, the metadata of the third-level inode file2 includes the storage location information of to-be-stored data, such as a file file2, indicating the storage location of the file file2. If the fourth-level inode file3 is a last-level inode, the metadata of the fourth-level inode file3 includes the storage location information of to-be-stored data such as a file file3, indicating the storage location of the file file3.

Accordingly, the engine layer may determine an index structure, which may include multi-level inodes corresponding to the multi-level directories, and the engine layer may determine metadata of each inode. With respect to the metadata of each inode, the metadata of the inode may include storage location information of a next-level inode of the inode. In addition, the metadata of the inode may further include inode information of file semantics (such as attributes of a stored file, etc., for example, authority, type, size, and time) and dentry information (such as inode name, file name, and inode information). In addition, the metadata of the inode may further include the owner of the S3 object, etag (an entity value of a requested variable, or a token associated with a Web resource), etc. For coincide fields of different protocols, content of metadata of the inode may be reused. In addition, the content of the metadata may also be customized.

The persistence layer is used for storing data and metadata based on the index structure, namely, storing the data and the metadata in a specified storage medium (such as a disk) and reading the data and the metadata from the specified storage medium. For example, for each inode, the metadata of the inode is stored based on the storage location information of the inode; and to-be-stored data is stored based on the storage location information of the to-be-stored data. For example, for each inode, the metadata of the inode is read based on the storage location information of the inode, and the to-be-stored data is read based on the storage location information of the to-be-stored data.

For example, the metadata of the first-level inode bucket1 is stored in a fixed storage location of a disk, and the metadata of the first-level inode bucket1 is read from the fixed storage location of the disk.

The metadata of the first-level inode bucket1 includes the storage location information of the second-level inodes dira, dirb, dirc, and file4, and the metadata of the second-level inode dira is stored in a location of the disk indicated by the storage location information of the second-level inode dira. The metadata of the second-level inode dirb is stored in a location of the disk indicated by the storage location information of the second-level inode dirb, and so on. Or the metadata of the second-level inode dira is read from a location of the disk indicated by the storage location information of the second-level inode dira, and the metadata of the second-level inode dirb is read from a location of the disk indicated by the storage location information of the second-level inode dirb.

The metadata of the second-level inode dira may include the storage location information of the third-level inode file1, thus, the metadata of the third-level inode file1 may be stored in a location of the disk indicated by the storage location information of the third-level inode file1, and so on. In some examples, the metadata of the third-level inode file1 may be read from a location of the disk indicated by the storage location information of the third-level inode file1, and so on.

The metadata of the third-level inode file1 may include the storage location information of the to-be-stored data (for example, the file file1). Therefore, the file file1 may be stored in a location of the disk indicated by the storage location information of the file file1. In some examples, the metadata of the third-level inode file1 may include the storage location information of the stored data (for example, the file file1), and thus the file file1 may be read from a location of the disk indicated by the storage location information of the file file1.

In an example, the to-be-stored data or the stored data may be unstructured data or other types of data, where the unstructured data may include, but is not limited to, social media content, images, audio, video, text, HTML, various reports, etc., and the type of the unstructured data is not limited.

In an example, if a uniform resource locator in a request of an object storage protocol (for example, S3 protocol) corresponds to same multi-level directories as a file path in a request of a distributed file storage protocol (for example, NFS protocol, CIFS protocol, or POSIX protocol), the uniform resource locator and the file path correspond to a same target index structure. That is, the metadata of the unstructured data and the unstructured data itself will be written to the disk through the persistence layer, and the same file path or URL of S3 points to the same piece of data, that is, if a target index structure created by a request based on an object storage protocol is the same as that created by a request based on a distributed file storage protocol, the two target index structures point to the same piece of unstructured data.

Accordingly, an object or a file with a same index path created by an object storage protocol or a distributed file storage protocol can be represented by the same piece of metadata, and does not need to be divided into two pieces of metadata. All requests from the protocol layer to the engine layer will carry the current protocol type, which is convenient for the engine layer to process the same metadata differently and compatibly according to the logic of the corresponding protocol semantics, so as to ensure the completeness of the semantics.

The technical solution of the present disclosure is described in combination with several specific application scenarios in the following.

Application scenario 1: a data storage process, which may include the following blocks.

In block S11, a data storage request is obtained, where the data storage request includes directory information, and multi-level directories are determined based on the directory information, for example, the directory information may be divided into multi-level directories.

In an example, the protocol layer may receive a data storage request based on an object storage protocol (e.g., S3 protocol), and the data storage request includes a uniform resource locator. Based on this, the uniform resource locator may be divided into multiple levels of directories based on the second delimiters in the URL, that is, the characters behind each second delimiter in the uniform resource locator correspond to a directory, and the second delimiters may be "/".

In an example, the protocol layer may receive a data storage request based on a distributed file storage protocol (e.g., NFS protocol, CIFS protocol, or POSIX protocol), and the data storage request may include a file path. Based on this, the file path may be divided into multi-level directories based on the first delimiters in the file path, that is, the characters after each first delimiter in the file path correspond to a directory.

In block S 12, a target index structure is determined based on multi-level directories in the directory information, where the target index structure includes multi-level inodes corresponding to the multi-level directories. For example, the protocol layer may send the multi-level directories to the engine layer, and the engine layer determines the target index structure based on the multi-level directories after receiving the multi-level directories.

In an example, for each inode in the target index structure, if the inode is not a last-level inode of the multi-level inodes, the metadata of the inode includes storage location information of a next-level inode of the inode, or if the inode is a last-level inode of the multi-level inodes, the metadata of the inode includes storage location information of to-be-stored data.

In block S13, for each inode, the metadata of the inode is stored based on the storage location information of the inode, and the to-be-stored data is stored based on the storage location information of the to-be-stored data.

For example, the persistence layer is used to store the to-be-stored data and the metadata (i.e., the metadata of the to-be-stored data) based on the target index structure. The to-be-stored data may be unstructured data, for example, the to-be-stored data and the metadata are stored in a specified storage medium (such as a disk). For example, for each inode, the metadata of the inode is stored in a location of the disk indicated by the storage location information of the inode. Furthermore, the to-be-stored data is stored in a location of the disk indicated by the storage location information of the to-be-stored data.

Application scenario 2: a data reading process, which may include the following blocks.

In block S21, a data read request is obtained, where the data read request includes directory information, and multi-level directories are determined based on the directory information, for example, the directory information may be divided into multi-level directories.

In an example, the protocol layer may receive a data read request based on an object storage protocol (e.g., S3 protocol), and the data read request includes a uniform resource locator. Based on this, the uniform resource locator may be divided into multiple levels of directories based on the second delimiters in the URL, that is, the characters behind each second delimiter in the uniform resource locator correspond to a directory, and the second delimiters may be "/".

In an example, the protocol layer may receive a data read request based on a distributed file storage protocol (e.g., NFS protocol, CIFS protocol, or POSIX protocol), and the data read request may include a file path. Based on this, the file path may be divided into multi-level directories based on the first delimiters in the file path, that is, the characters after each first delimiter in the file path correspond to a directory.

In block S22, a target index structure is determined based on multi-level directories in the directory information, where the target index structure includes multi-level inodes corresponding to the multi-level directories. For example, the protocol layer may send the multi-level directories to the engine layer, and the engine layer determines the target index structure based on the multi-level directories after receiving the multi-level directories.

In an example, for each inode in the target index structure, if the inode is not a last-level inode of the multi-level inodes, the metadata of the inode includes storage location information of an next-level inode of the inode, or if the inode is a last-level inode of the multi-level inodes, the metadata of the inode includes storage location information of to-be-stored data.

In block S23, for each inode, the metadata of the inode is read based on the storage location information of the inode. If the inode is not a last-level inode of the multi-level inodes, storage location information of an inode of the next level of the inode is determined based on the metadata of the inode. If the inode is a last-level inode of the multi-level inodes, storage location information of stored data is determined based on the metadata of the inode, and the stored data is read based on the storage location information.

For example, the persistence layer is used to read stored data and metadata based on the target index structure, such as reading stored data and metadata from a specified storage medium (such as a disk) .

For example, with respect to each inode, the storage location information of the inode is determined first (that is, the storage location information of the inode is obtained from the metadata of an inode of a higher level than the inode), thus, the metadata of the inode is read from a location of the disk indicated by the storage location information of the inode. And the metadata of the inode further includes the storage location information of an inode of the next level of the inode. Therefore, the storage location information of an inode of the next level of the inode may be determined based on the metadata.

By analogy, until a last-level inode of the multi-level inodes, the metadata of the inode includes storage location information of stored data, so that the stored data can be read from a location of the disk indicated by the storage location information of the stored data, and thus the read of the stored data is successful.

Application scenario 3: Processing for interface operation request of a distributed file storage protocol.

In an example, if an interface create request based on the distributed file storage protocol is obtained, a new inode is added to the target index structure based on the interface create request. For example, for an interface create request of POSIX protocol, the interface create request can be converted into an operation of adding an inode, so that a new inode can be added in the target index structure based on the interface create request.

For example, the interface create request may include directory information, multi-level directories are determined based on the directory information, and a target index structure is determined based on the multi-level directories, where the target index structure includes multi-level inodes corresponding to the multi-level directories. On this basis, the interface create request includes information of a to-be-added interface, such as the directory under which the to-be-added interface is to be located. Therefore, a new inode may be added under the inode corresponding to the directory.

In an example, if an interface delete request based on a distributed file storage protocol is obtained, an existing inode is deleted from the target index structure based on the interface delete request. For example, for an interface delete request of POSIX protocol, the interface delete request can be converted into an operation of deleting an inode, so that an existing inode can be deleted from the target index structure based on the interface delete request.

For example, the interface delete request may include directory information, multi-level directories are determined based on the directory information, and a target index structure is determined based on the multi-level directories, where the target index structure includes multi-level inodes corresponding to the multi-level directories. On this basis, the interface delete request includes information of a to-be-deleted interface, such as which directory the to-be-deleted interface corresponds to, so the inode corresponding to the directory may be deleted from the target index structure.

In an example, if a hard link interface request based on a distributed file storage protocol is obtained, a new inode is added to the target index structure, and the new inode is pointed to an existing inode. For example, for a hard link interface request of POSIX protocol, the hard link interface request can be converted to adding a new inode and pointing the new inode to an existing inode.

For example, the hard link interface request may include directory information, multi-level directories are determined based on the directory information, and a target index structure is determined based on the multi-level directories, where the target index structure includes multi-level inodes corresponding to the multi-level directories. On this basis, the hard link interface request includes information of a to-be-added interface, such as under which directory the to-be-added interface is to be located. Therefore, a new inode may be added under the inode corresponding to the directory, and the new inode is pointed to an existing inode, so as to implement the hard link interface.

In an example, if a soft link interface request based on a distributed file storage protocol is obtained, a new inode is added to the target index structure, and the metadata of the new inode includes a string pointing to an arbitrary path. For example, for a soft link interface request of POSIX protocol, the soft link interface request can be converted to adding a new inode, and the metadata of the new inode includes a string pointing to an arbitrary path.

For example, the soft link interface request may include directory information, multi-level directories are determined based on the directory information, a target index structure is determined based on the multi-level directories, and the target index structure includes multi-level inodes corresponding to the multi-level directories. On this basis, the soft link interface request includes the information of a to-be-added interface, such as under which directory the to-be-added interface is to be located. Therefore, a new inode may be added under the inode corresponding to the directory, and the metadata of the new inode includes a string pointing to an arbitrary path, so as to implement the soft link interface.

In an example, if an interface write request based on a distributed file storage protocol is obtained, data is written to an offset address specified by an inode of the target index structure based on the interface write request. For example, for an interface write request of POSIX protocol, the interface write request may be converted to writing a data block to the offset address specified by the inode, and thus, data may be written to the offset address specified by the inode based on the interface write request.

For example, the interface write request may include directory information, multi-level directories are determined based on the directory information, and a target index structure is determined based on the multi-level directories, where the target index structure includes multi-level inodes corresponding to the multi-level directories. On this basis, the interface write request includes information of data to be written, such as the directory under which the data to be written is to be located, so that the data can be written to the offset address specified by the inode corresponding to the directory.

In an example, if an interface read request based on a distributed file storage protocol is obtained, data is read from an offset address specified by an inode of the target index structure based on the interface read request. For example, for an interface read request of POSIX protocol, the interface read request may be converted to reading a data block from an offset address specified by the inode, and thus, data may be read from an offset address specified by the inode based on the interface read request.

For example, the interface read request may include directory information, multi-level directories are determined based on the directory information, a target index structure is determined based on the multi-level directories, and the target index structure includes multi-level inodes corresponding to the multi-level directories. On this basis, the interface read request includes information of the data to be read, such as under which directory the data to be read is located, so the data can be read from the offset address specified by the inode corresponding to the directory.

Application scenario 4: Processing for interface operation request of an object storage protocol (S3 protocol).

If an interface read request (for example, a get Object interface request) based on an object storage protocol is obtained, the interface read request may include directory information, multi-level directories are determined based on the directory information, and a target index structure is determined based on the multi-level directories, where the target index structure includes multi-level inodes corresponding to the multi-level directories.

For each inode, metadata of the inode is obtained. If the inode is not a last-level inode of the multi-level inodes, the storage location information of a next-level inode of the inode may be determined based on the metadata of the inode, and the metadata of the next-level inode may be obtained based on the storage location information, and by analogy, the similar process is applied until the last-level inodes of the multi-level inodes.

If the inode is a last-level inode of the multi-level inodes, and the interface read request is determined to be used to read a hard link file based on the metadata of the inode (if the directory information of the interface read request points to a hard link created for a file scenario, the metadata of the inode includes information that the current data to be read is a hard link file), storage location information of the stored data is determined based on the metadata of the inode, and the stored data is read based on the storage location information. For example, a data block can be read according to the Object Identifier (OID) in the metadata of the inode, and the reading process is not limited.

If the inode is a last-level inode of the multi-level inodes, and the interface read request is determined to be used for reading a soft link file based on the metadata of the inode (if the directory information of the interface read request points to a soft link created for the file scenario, the metadata of the inode includes information that the current data to be read is a soft link file), the path information of the soft link file is determined based on the metadata of the inode, a new inode is queried according to the path information of the soft link file, the storage location information of stored data is determined based on the metadata of the new inode, and the stored data is read based on the storage location information.

For example, for a hard link created for a file scenario, the metadata of a last-level inode includes an OID, and a data block can be read based on the OID in the metadata of the inode. For a soft link created for a file scenario, if the metadata of a last-level inode includes path information of a soft link file, a new inode may be queried based on the path information of the soft link file in the metadata of the inode, and the metadata of the new inode includes an OID, and a data block may be read based on the OID in the metadata of the new inode.

In an example, the hard link is implemented as follows. An existing inode is specified, a new inode is created pointing to the old (existing) inode, and the new inode does not carry any metadata, but only carries the OID pointing to the old inode. The soft link is implemented as follows. A new inode is created and the path string of the incoming parameter is written into the symlink (symbol link) field of the currently added inode.

Application Scenario 5: Processing for interface operation request of an object storage protocol (S3 protocol).

If a put interface request based on an object storage protocol is obtained, where the put interface request is used for writing a new object, and the put interface request may include directory information, multi-level directories are determined based on the directory information, and a target index structure is determined based on the multi-level directories, where the target index structure includes multi-level inodes corresponding to the multi-level directories.

For each inode, metadata of the inode is obtained. If the inode is not a last-level inode of the multi-level inodes, the storage location information of a next-level inode of the inode may be determined based on the metadata of the inode, and the metadata of the next-level inode may be obtained based on the storage location information, and by analogy, the similar process is applied until the last-level inodes of the multi-level inodes.

If the inode is a last-level inode of the multi-level inodes, the data is written first, and the inode is created after the data is written. For example, the put interface will first apply for a temporary OID, this temporary OID is used to write a data block, and the metadata of the inode is updated. When the metadata of the inode is updated, a new inode is created according to the temporary OID and the directory information.

Application scenario 6: Processing for interface operation request of a distributed file storage protocol.

If a rename interface request based on a distributed file storage protocol is obtained, where the rename interface request may include directory information, multi-level directories are determined based on the directory information, and a target index structure is determined based on the multi-level directories, where the target index structure includes multi-level inodes corresponding to the multi-level directories.

The rename interface request may include information of a source inode (source directory), and thus, the source inode is deleted from the multi-level inodes of the target index structure. The rename interface request may include information of a target inode (target directory), and thus, the target inode is created in the target index structure.

The rename interface request can ensure the atomicity of deleting the old inode and adding the new inode in a two-stage submission manner, that is, the rename interface request submitted for the first time includes the information of the source inode, and the rename interface request submitted for the second time includes the information of the target inode.

In order to prevent the processing for the rename interface request from conflicting with other interface operations, the metadata of the inode will be marked when various types of interface modifications are executed. The mark indicates the status of being modified. At this time, other operations are not allowed to modify the inode, so as to prevent data disorder caused by concurrent modifications.

Application Scenario 7: Processing for a special semantic of an object storage protocol (S3 protocol).

ListObjects is a special semantic of an object storage protocol. ListObjects is used to list all objects in a bucket, or ListObjects is used to filter or group all objects in a bucket based on a prefix and a delimiter. The semantic of ListObjects is similar to that of readdir (read directory) of a distributed file storage protocol. However, ListObjects needs an output in lexicographic order, while the readdir of a distributed file storage protocol does not restrict the output order.

Based on this, if a ListObjects request based on an object storage protocol is obtained, where the ListObjects request may include directory information, multi-level directories are determined based on the directory information, a target index structure is determined based on the multi-level directories, where the target index structure includes multi-level inodes corresponding to the multi-level directories, and the multi-level inodes are the multi-level inodes corresponding to the specified bucket in the ListObjects request.

For each inode, metadata of the inode is obtained. If the inode is not a last-level inode of the multi-level inodes, storage location information of a next-level inode of the inode may be determined based on the metadata of the inode, and the metadata of the next-level inode may be obtained based on the storage location information, and by analogy, the similar process is applied until the last-level inodes of the multi-level inodes.

Metadata of the multi-level inodes corresponding to the bucket is returned to the client according to a specified order. For example, the specified order may include, but is not limited to, a lexicographic order, and the lexicographic order may be arranged in alphabetical order.

For example, if ListObjects is used to list all objects in a bucket, the metadata of all inodes corresponding to the bucket may be returned to the client in a specified order. In some examples, if ListObjects is used to filter all objects in the bucket, the metadata of all inodes corresponding to the bucket may be filtered, and the filtered metadata of the inodes may be returned to the client in a specified order, with no limitation to this filtering process. In some examples, if ListObjects is used to group all the objects in the bucket, the metadata of all the inodes corresponding to the bucket may be grouped, and the grouped metadata of the inodes may be returned to the client in a specified order, with no limitation to this grouping process.

In an example, during storage of the metadata of the multi-level inodes, the metadata of the multi-level inodes may be stored in the specified order. Based on this, when the metadata of the multi-level inodes corresponding to the bucket is obtained, the metadata of the multi-level inodes corresponding to the bucket may be obtained in the specified order.

In an example, since the metadata has been split into multiple inodes for storage, during the processing for ListObjects, the split operation may be performed according to the multi-layer inodes in the bucket, and an operation similar to readdir is performed on inodes of each level, but the results are required to be returned in lexicographic order. The sorting processing is performed on a plurality of returned results in the protocol layer to obtain the sorting results in the whole bucket.

In an example, during the management of metadata distribution in the engine layer, the metadata of each storage node may be stored in a distributed database according to lexicographic order, and the metadata of each storage node is cached in the memory in a hash sorting manner. The reason for adopting the above manner is that in the file scenario, the readdir can be processed and returned more quickly by using the hash sorting in the memory, while in the ListObject scenario, the lexicographic order of the distributed database may be used for processing and returning, so as to meet the interface query capabilities of the two different sorting manners.

When the lexicographic order of the distributed database is adopted for processing and returning, the interface of the distributed database may be directly called for querying, such as returning the first 1000 results, returning the 1000 - 2000 results, etc.

Application Scenario 8: Processing for a special semantic of an object storage protocol (S3 protocol).

Multipart upload is a special semantic of an object storage protocol. Multipart upload allows a relatively large object to be divided into multiple parts for upload, and these parts are combined into a complete object. The upper layer interface usually refers to a high-level interface that manages and controls the multipart upload, so that developers can operate the multipart upload process more conveniently. Lossless integration needs to be compatible with the application scenario of multipart upload.

For the multipart upload process, the client will upload a batch of Parts (parts in a Multipart) through multiple PUT requests after successfully initiating an InitMultipart request. In an object storage protocol, the size of each part may be different (the allowable size range of a part is [5MB ~ 5GB], and the last part can be less than 5MB). A multipart object can have 10000 parts at most, and the parts are allowed to be uploaded out of order (for example, the upload order can be 3, 2, 5, 4, 1). After all the parts are uploaded, all the parts may be merged into one large object through a CompleteMultipart request.

Accordingly, the steps for uploading a multipart object are as follows: 1. InitMulitpart: uploadid (upload identification) is generated, the OID of a data block is applied for, and the event information of the Multipart is stored in the distributed database.

2. PutPart (part upload): data is written into the data block corresponding to the OID. After the data is written, the block information of the part is generated, where the block information includes OID + [part No.] [Overwrite ID] [Block No.]. The OID represents a unique identification of a multipart object, and all the parts correspond to the same OID.

The part number indicates the identification of a part. For example, when the part number is 3, it indicates the third part.

The overwrite ID of a part indicates the number of repetitions of the part. The overwrite ID may be 0 by default. For the scenario of the same part overwrite, the [overwrite ID] may be increased by 1 during each overwrite. A single part may support M times (such as 8 times) of concurrent overwrites. For example, for a same part, it can be repeatedly sent for 8 times. For the part sent for the first time, the overwrite id of the part is 1, and for the part sent for the second time, the overwrite id of the part is 2, and so on.

The block number indicates the identification of a data block. For example, for a same part, the part can be divided into multiple data blocks, and the sizes of different data blocks may be the same or different. For each data block of the same part, the block number represents the identification of the data block.

3. CompleteMultipart: complete metadata corresponding to the multipart object is generated, [part No.] [Overwrite ID] [Block No.] of the part is constructed into a mapping table, and is stored in the metadata of the inode in the form of an array. The mapping table is used as extended data of the metadata. In addition, the state identification indicates that the current inode is a Multipart type inode. In the CompleteMultipart process, the event information of the Multipart corresponding to the OID may further be deleted, indicating that the multipart upload process is completed.

Based on this, if a multipart upload request based on an object storage protocol is obtained, where the multipart upload request may include directory information, multi-level directories are determined based on the directory information, and a target index structure is determined based on the multi-level directories, where the target index structure may include multi-level inodes corresponding to the multi-level directories.

For each inode, metadata of the inode is obtained. If the inode is not a last-level inode of the multi-level inodes, storage location information of a next-level inode of the inode may be determined based on the metadata of the inode, and the metadata of the next-level inode may be obtained based on the storage location information, and by analogy, the similar process is applied until the last-level inodes of the multi-level inodes.

If the inode is a last-level inode of the multi-level inodes, storage location information of to-be-stored data may be determined based on the metadata of the inode. Based on the storage location information of the to-be-stored data, the data blocks in the multipart upload request are stored, where the to-be-stored data may include a plurality of parts, and for each part, the part may include at least one data block.

After a data block in the multipart upload request is stored, extended data is added to the metadata of the inode, and the extended data includes the part identification of the part to which a data block belongs, the overwrite identification of the part, the block identification of the data block, and the size of the data block. For example, if the sizes of all data blocks are a same fixed value, the extended data may not include the size of the data blocks.

For example, after a data block 1 of a part 2 is stored in the disk, the extended data is added to the metadata of a last-level inode, where the extended data includes the part identification 2 of the part 2, the overwrite identification 1 of the part 2, the block identification 21 of the data block 1, and the size of the data block 1.

After a data block 2 of the part 2 is stored in the disk, the extended data is added to the metadata of a last-level inode, where the extended data includes the part identification 2 of the part 2, the overwrite identification 1 of the part 2, the block identification 22 of the data block 2, and the size of the data block 2.

After a data block 11 of a part 1 is stored in the disk, the extended data is added to the metadata of a last-level inode, where the extended data includes the part identification 1 of the part 1, the overwrite identification 1 of the part 1, the block identification 11 of the data block 11, and the size of the data block 11.

By analogy, each time after a data block is stored in the disk, the extended data corresponding to the data block needs to be added to the metadata of a last-level inode, and the order of the parts is not limited, that is, the parts are not necessarily stored in the order of 1, 2, 3, 4, 5. In addition, for different data blocks of a same part, the order of the data blocks is not limited, that is, the data blocks are not necessarily stored in the order of 1, 2, 3, 4, 5. Based on this, in the metadata of the last-level inode, the order of the parts is not limited, and the order of the data blocks is also not limited.

After all the parts are stored in the disk, the multipart upload process is completed, the metadata of the last-level inode includes the extended data corresponding to all data blocks of all the parts, and all the extended data forms a mapping table and is stored in the metadata of the inode in an array form.

After all the parts are stored in the disk, a state identification may be added to the metadata of a last-level inode, and the state identification indicates that the current inode is a Multipart type inode.

In an example, for the multipart reading process, the client may initiate a read request based on a distributed file storage protocol (a get request based on an object storage protocol, the get request and the read request are processed in a similar manner, and the read request will be described as an example later). Based on this, if the read request based on a distributed file storage protocol is obtained, where the read request may include directory information, multi-level directories are determined based on the directory information, and a target index structure is determined based on the multi-level directories, where the target index structure may include multi-level inodes corresponding to the multi-level directories.

For each inode, metadata of the inode is obtained. If the inode is not a last-level inode of the multi-level inodes, storage location information of a next-level inode of the inode may be determined based on the metadata of the inode, and the metadata of next-level inode may be obtained based on the storage location information, and by analogy, the similar process is applied until the last-level inodes of the multi-level inodes.

If the inode is a last-level inode of the multi-level inodes, and the metadata of the inode includes a state identification, it may be determined that the current inode is a Multipart type inode, that is, the read request is used to access a multipart object, and a multipart reading process needs to be performed.

Then, a target part identification of the part to be read is obtained based on the read request. For example, the read request may include the part identification of the part to be read, and the part identification may be used as the target part identification, or the target part identification may be determined in other ways, which is not limited.

Then, the maximum overwrite identification corresponding to the target part identification is determined based on the metadata of the inode. For example, all extended data corresponding to the target part identification is traversed in order, and the maximum overwrite identification may be determined from the extended data, and the maximum overwrite identification is used to indicate the overwrite identification of the part last sent. For example, assuming that the extended data corresponding to the target part identification includes the overwrite identifications 1, 2, and 3, the maximum overwrite identification is the overwrite identification 3, that is, the part is repeatedly sent three times.

Then, the target extended data corresponding to the target part identification and the maximum overwrite identification is determined from the metadata of the inode. For example, assuming that a part corresponds to two data blocks, the target part identification is part identification 2, and the maximum overwrite identification is overwrite identification 3, the target extended data includes extended data of part identification 2 + overwrite identification 3 + block identification 21 and extended data of part identification 2 + overwrite identification 3 + block identification 22.

Then, the offset (offset address) and the len (length) of the part to be read are determined based on the sorting position of the target extended data and the sizes of the data blocks in the target extended data. The offset represents an offset address of the part to be read in the disk, and the len represents the data length of the part to be read.

For example, for the extended data of the part identification 2 + the overwrite identification 3 + the block identification 21, assuming that the sorting position of the extended data is 6 (that is, the sixth piece of extended data), and the total len of the previous five pieces of extended data is A (that is, the sum of the sizes of the data blocks in the five extended data is A), the offset of the part to be read is A. The len of the part to be read is the sizes of the data blocks in the extended data.

Then, storage location information corresponding to the part to be read is determined based on the metadata of the inode (the metadata of the last-level inode includes the storage location information), and the part to be read may be obtained based on the storage location information, the offset, and the len. For example, from the first address of the storage location information, a position after the offset is used as a start address of the part to be read, and the data read from the start address with the len is the part to be read.

At this point, the reading process of the part to be read is completed, that is, the actual hit part may be found for reading according to the offset (offset address) and the len (length). If the part to be read includes multiple parts, the results of the multiple parts need to be read and spliced, and returned to the client.

In an example, for an overwriting scenario, the client may initiate an overwrite request based on a distributed file storage protocol. The processing of the overwrite request is similar to that of the read request, and an actual storage location of a part to be written needs to be determined based on storage location information, an offset, and a len of the part to be written. Different from the read request, it is not to read the part to be read from the actual storage position, but to update the part to be written in the overwrite request to the actual storage position, thereby overwriting the existing part. In addition, if it is necessary to overwrite across multiple parts, multiple parts obtained by splitting can be written respectively, and then the metadata of the inode is updated.

In an example, for the truncate scenario of a distributed file storage protocol, the size of a file can be truncated to a specified length, and when truncating a file, the data at the end of the file will be deleted, so that the size of the file is reduced to a specified length. Based on this, for the truncate process, the client may initiate a truncate operation request based on the distributed file storage protocol. If a truncate operation request based on the distributed file storage protocol is obtained, where the truncate operation request may include directory information, multi-level directories are determined based on the directory information, and a target index structure is determined based on the multi-level directories, where the target index structure may include multi-level inodes corresponding to the multi-level directories.

For each inode, metadata of the inode is obtained. If the inode is not a last-level inode of the multi-level inodes, storage location information of a next-level inode of the inode may be determined based on the metadata of the inode, and the metadata of the next-level inode may be obtained based on the storage location information, and by analogy, the similar process is applied until the last-level inodes of the multi-level inodes.

If the inode is a last-level inode of the multi-level inodes, and the metadata of the inode includes a state identification, it may be determined that the current inode is an inode of a Multipart type, that is, the truncate operation request is used to perform a truncate operation on a multipart object.

Then, the extended data of a plurality of parts (such as all parts) may be determined from the metadata of the inode, and the plurality of parts may be sorted based on the extended data, and the sorting result may be such as part 1 (the part whose part identification is 1), part 2.., and so on.

A to-be-truncated part is determined based on the sorting result and the truncate size in the truncate operation request. For example, K parts are selected starting from part 1, the total size of the K parts (i.e., the total size of all data blocks of the K parts) may be equal to the truncate size in the truncate operation request, and the last part (the K-th part) may be a complete part or an incomplete part. It is necessary to ensure that the total size of the K parts is equal to the truncate size, so that all the parts are truncated by using the truncate size, and then the K parts are used as the to-be-truncated part.

For each to-be-truncated part, the offset and the len of the to-be-truncated part are determined based on the sorting position of extended data of the to-be-truncated part and the size of each data block in the to-be-truncated part. The offset represents the offset address of the to-be-truncated part in the disk, and the len represents the data length of the to-be-truncated part. For example, if the to-be-truncated part includes a plurality of data blocks, and the plurality of data blocks are continuous, the offset represents the offset address of the first data block in the disk, and the length represents the data length of all the data blocks. For example, if the to-be-truncated part includes a plurality of data blocks, and the plurality of data blocks are not continuous, each data block separately corresponds to an offset and a len, the offset representing an offset address of the data block in the disk, and the len representing a data length of the data block.

Then, storage location information corresponding to the to-be-truncated part is determined based on the metadata of the inode (the metadata of the last-level inode includes the storage location information), and a clearing operation is performed on the to-be-truncated part based on the storage location information, the offset, and the len. For example, from the first address of the storage location information, a position after the offset is used as a start address of the to-be-truncated part, and the data from the start address with the len is the to-be-truncated part. Based on this, the clearing operation may be performed on the to-be-truncated part.

Accordingly, when performing truncate on a multipart object, the multipart information involved (to-be-truncated parts) is found according to the size to be truncated (truncate size), and the pieces of data are truncated one by one, that is, the clearing operation is performed on the to-be-truncated parts. A part of data in a multipart closed to a boundary may be truncated.

Application Scenario 9: Processing for a special semantic of an object storage protocol (S3 protocol).

A multi-version function is a special semantic of the object storage protocol. The multi-version function allows multiple versions of an object to be stored in a same key. In this way, when a write operation occurs, the object storage protocol will not directly overwrite the old version of the object, but will retain it, thus forming a version history. Each version of the object is stored with a unique version identification. The multi-version function provides a data protection mechanism that allows to revert to a previous version even if an unexpected write operation occurs. Based on this, the metadata of the inode needs to consider the compatibility of the snapshot capability and the multi-version capability. For example, the metadata of the inode includes a snapshot identification. When an object of an object storage protocol or a file of a distributed file storage protocol is uploaded, a snapshot identification is backed up and added to the metadata as the latest version, and the snapshot identification is incremented and is greater than 0. Based on the function of multi-version, a snapshot identification in the metadata of the inode is assigned with a specific value (such as a negative value, such as -1, - 2, -3, etc.), and the state identification is marked to indicate that the inode has the multi-version characteristics.

On this basis, in a case where multi-version is enabled, for each inode, if the metadata of the inode includes a state identification (that is, the inode has multi-version characteristics) , when the first metadata of the current version (that is, the latest version) is generated for the inode, the identification of the latest version may be generated for the first metadata (that is, a version identification is generated as the identification of the latest version, and the identification of the latest version is unique) , and the identification of the latest version is added to the first metadata. And if the inode already corresponds to second metadata of a historical version, a snapshot identification may be generated for the second metadata, where the snapshot identification may be a negative value (for example, -1, -2, -3, etc.), and the snapshot identification is added to the second metadata, the identification of a target version is generated for the second metadata and the identification of the target version is added to the second metadata.

For example, if an upload request based on an object storage protocol is received, it is determined that the first metadata of the current version needs to be generated for the inode, and the inode already corresponds to the second metadata of a historical version (i.e., the old metadata). Based on this, a snapshot identification is generated for the second metadata, and the snapshot identification is added to the second metadata, so that the second metadata is used as metadata of a history version. The first metadata is generated for the inode, that is, the first metadata is used as metadata of the current version. In this way, there are metadata of two different versions, conforming to the semantics of multiple versions.

In an example, when the identification of the target version is generated for the second metadata of the historical version, the identification of the target version may include a first random character, a target ordered character and a second random character, and the target ordered character may be obtained by performing an encryption operation on an initial ordered character and the first random character. The initial ordered character may be obtained by operating on an initial ordered character of the metadata of the previous version.

For example, the identification of the target version (also known as the version number of multi-version, marked as versionId) is a string of 31-bit characters, and object versions include a historical version, a current version, and a delete marker.

For example, the identification of the target version may include a first random character of 11 bits, an encrypted target ordered character of 8 bits, and a second random character of 12 bits. The above is only an example, and the identification of the target version is not limited. The first random character of 11 bits and the second random character of 12 bits may be randomly set.

For example, an initial value, such as z9JH27Gz, may be given to an ordered character of 8 bits, the initial ordered character (order_str) of the first version may be z9JH27Gz, and the initial ordered character of each subsequent new version is lexicographically decremented by one on the basis of the initial ordered character of the previous version. That is, the initial ordered character (order_str) of the second version may be z9JH27Gy, and so on. So that an initial ordered character of each version may be obtained, that is, the initial ordered character of the current version may be obtained by operating on the initial ordered character of the metadata of the previous version, that is, lexicographically decrementing by one to obtain the initial ordered character of the current version.

Based on the initial ordered character of the current version and the first random character of 11 bits, an encrypted target ordered character of 8 bits may be calculated and obtained. For example, the target ordered character may be [order_str] ⊕ [the first 8 bits of the first random character of 11 bits], and the order_str represents the initial ordered character of the current version. Accordingly, the target ordered character may be obtained by performing an encryption operation on the initial ordered character and the first random character.

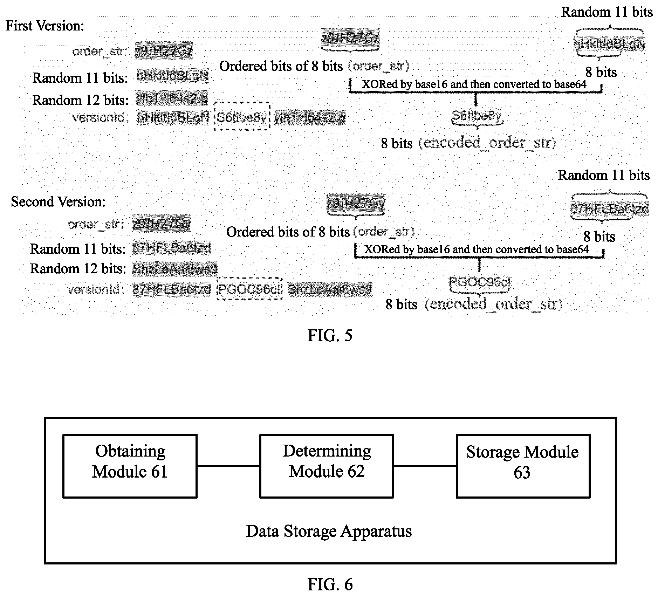

For example, referring to FIG. 5, FIG. 5 is a schematic diagram of the identification of the target version. For the first version, the initial ordered character is z9JH27Gz, and the first random character of 11 bits and the second random character of 12 bits may be randomly generated. Then, the initial ordered character and the first 8 bits of the first random character are XORed by base16 and then converted to base64 to obtain the encrypted target ordered character of 8 bits. Then, the first random character of 11 bits, the target ordered character of 8 bits, and the second random character of 12 bits may be combined to obtain the identification of the target version.

For the second version, the initial ordered character is z9JH27Gy (determined based on the initial ordered character of the first version), and the first random character of 11 bits and the second random character of 12 bits may be randomly generated. Then, the initial ordered character and the first 8 bits of the first random character are XORed by base16 and then converted to base64 to obtain the encrypted target ordered character of 8 bits. Then, the first random character of 11 bits, the target ordered character of 8 bits, and the second random character of 12 bits may be combined to obtain the identification of the target version.

Based on the processing, the version numbers of multi-version are endowed with an ordered attribute, and the functions of multi-version sorting and historical object access are realized by using an index, so that the storage space is saved and the logic realization complexity is reduced. When an access is based on a distributed file storage protocol (such as NFS, CIFS, POSIX), only metadata of the current version will be seen. The readdir, stat and other interfaces of the file will filter out the inodes with negative snapshot identifications. The object versions with completely invisible file semantics will not affect the normal use of the file system, thereby achieving compatibility.

In the file snapshot scenario, the snapshot identification assigned when the file is snapped is a positive number that increases upward from 1. Therefore, the snapshot identification of the file for accessing the snapshot version of the file is completely different from the identification of the object versions, which is easy to distinguish and ensures that the multi-versions and snapshot characteristics do not interfere with each other and are compatible with each other.

In an example, in the authority control of different protocols, in order to ensure the completeness of multiple protocol semantics, the protocols with the same semantics are integrated. For example, in the distributed file storage protocol, NFSV3 and POSIX semantics are controlled for authority by ugo and POSIX ACL. Then, where there are semantic differences, such as NFSV4 ACL, NTACL using by CIFS, S3 object ACL and bucket ACL, these semantic differences will not be integrated. Instead, the original semantic logic is preserved, and the control fields of these ACLs are persisted to the extended attributes of the metadata of the corresponding inode. Then, during an operation corresponding to a protocol, the operation sent from the protocol layer to the engine layer carries the protocol type of the current operation, and the engine layer may read the ACL information of the metadata of the inode according to the corresponding protocol type to perform fine-grained authority control.

As can be seen from the above technical solutions, in the examples of the present disclosure, the intercommunications between an object storage protocol and a distributed file storage protocol can be realized, and when different protocols are inter-accessed, the semantic loss and performance decay may be reduced, and the space utilization rate is improved to the maximum. For example, a storage system enabling the intercommunications of S3, NFS, CIFS, and POSIX protocols is supported to solve the problems of semantic loss and performance decay caused by the intercommunications of different protocols. In the multi-version scenario and the multipart upload scenario, it is also fully compatible with the lossless mutual access of the distributed file storage protocol and the object storage protocol, and is fully compatible with the readdir interface of the file and the ListObjects interface of the object.

Flexibility and compatibility: NFS is supported for Unix/Linux systems and multiuser environments. CIFS/ Server Message Block (SMB) is supported for Windows environments. S3 is supported for modern cloud computing and big data environments. The multi-protocol support can meet the needs of different enterprises, and different operating systems and applications can seamlessly access the same data storage, improving business flexibility and compatibility. Data interoperability: Data can be interoperable between different protocols. Whether accessing by using NFS, CIFS or S3 protocol, users can see the same data. The interoperability simplifies data management and data sharing, and reduces the problem of data silos. Consistency guarantee: Seamless data access and sharing mean that users do not need to worry about data inconsistency when switching between different protocols, and data changes are reflected in the access paths of all protocols in real time. Cost savings: By eliminating the need to maintain multiple independent storage systems for different protocols, by a unified storage solution, hardware, software, and Operation & Maintenance costs may be significantly reduced, reducing data migration across multiple sets of storage, shortening overall process time, and reducing device costs and management costs.

Management Simplification: Consistent data management interfaces and strategies enable system administrators to manage storage resources more efficiently, and unified management tools and strategies reduce complexity and management overhead. Productivity Increase: Business units and teams may collaborate and share data more efficiently, regardless of operating system or application used. Business Continuity and Data Protection Enhancement: Unified storage solutions support advanced data protection features such as snapshots, backup, and disaster recovery, which provide greater assurance of business continuity. Longer Lifecycle Support: More flexible and reliable storage solutions extend the lifecycle of the systems by reducing rapid aging of hardwares and softwares due to limitations on mutual access.

Based on the same application concept as the above method, an example of the present disclosure proposes a data storage apparatus. Referring to FIG. 6, which is a schematic diagram illustrating the structure of the data storage apparatus, the apparatus may include:
an obtaining module 61, which is to obtain a data storage request including directory information, where in a case that the data storage request is based on an object storage protocol, the directory information includes a uniform resource locator; in a case that the data storage request is based on a distributed file storage protocol, the directory information includes a file path;
a determining module 62, which is to determine a target index structure based on the directory information, where the target index structure includes multi-level inodes corresponding to multi-level directories in the directory information, where for each inode, in response to that the inode is not a last-level inode of the multi-level inodes, metadata of the inode includes storage location information of a next-level inode of the inode, and in response to that the inode is a last-level inode of the multi-level inodes, the metadata of the inode includes storage location information of to-be-stored data;
a storage module 63, which is to, for each inode, store the metadata of the inode based on the storage location information of the inode; store the to-be-stored data based on the storage location information of the to-be-stored data.

In an example, the obtaining module 61 is further configured to, if the directory information includes a file path, divide the file path into multi-level directories based on first delimiters in the file path; or
if the directory information includes a uniform resource locator, divide the uniform resource locator into multi-level directories based on second delimiters in the uniform resource locator, where characters behind each second delimiter in the uniform resource locator corresponds to a directory.

In an example, if a uniform resource locator in a storage request of an object storage protocol corresponds to same multi-level directories as a file path in a storage request of a distributed file storage protocol, the uniform resource locator and the file path correspond to a same target index structure; where the to-be-stored data is unstructured data; the object storage protocol includes a simple storage service protocol, and the distributed file storage protocol includes at least one of a network file system protocol, a common Internet file system protocol and a portable operating system interface of UNIX protocol.

In an example, the obtaining module 61 is further to obtain a data read request including directory information, where in a case that the data read request is based on an object storage protocol, the directory information includes a uniform resource locator; in a case that the data read request is based on a distributed file storage protocol, the directory information includes a file path. The determining module 62 is further configured to determine multi-level inodes corresponding to the multi-level directories in the directory information, and the apparatus further includes a processing module which is configured to, for each inode, read metadata of the inode based on storage location information of the inode; in response to that the inode is not a last-level inode of the multi-level inodes, determine storage location information of a next-level inode of the inode based on the metadata of the inode; in response to that the inode is a last-level inode of the multi-level inodes, determine storage location information of stored data based on the metadata of the inode, and read the stored data based on the storage location information.

In an example, the obtaining module 61 is further configured to, in response to that an interface create request based on a distributed file storage protocol is obtained, add a new inode in the target index structure based on the interface create request; in response to that an interface delete request based on a distributed file storage protocol is obtained, delete an existing inode from the target index structure based on the interface delete request; in response to that a hard link interface request based on a distributed file storage protocol is obtained, add a new inode in the target index structure, and point the new inode to an existing inode; in response to that a soft link interface request based on a distributed file storage protocol is obtained, add a new inode in the target index structure, where metadata of the new inode includes a string pointing to an arbitrary path; in response to that an interface write request based on a distributed file storage protocol is obtained, write data to an offset address specified by an inode of the target index structure based on the interface write request; in response to an interface read request based on a distributed file storage protocol is obtained, read data from an offset address specified by an inode of the target index structure based on the interface read request.

In an example, the obtaining module 61 is further configured to, in response to that an interface read request based on an object storage protocol is obtained, determine multi-level inodes based on the interface read request; for each inode, obtain metadata of the inode. The determining module 62 is further configured to, in response to that the inode is a last-level inode of the multi-level inodes, and that the interface read request is determined to be used for reading a hard link file based on the metadata of the inode, determine storage location information of stored data based on the metadata of the inode, and read the stored data based on the storage location information; or in response to that the interface read request is determined to be used for reading a soft link file based on the metadata of the inode, determine path information of the soft link file based on the metadata of the inode, and query a new inode according to the path information of the soft link file, determine storage location information of stored data based on metadata of the new inode, and read the stored data based on the storage location information.

In an example, the obtaining module 61 is further configured to, in response to that a ListObjects request based on an object storage protocol is obtained, where the ListObjects request is used for listing all objects in a bucket, or the ListObjects request is used for filtering or grouping all objects in the bucket according to a prefix and a delimiter, determine multi-level inodes corresponding to the bucket based on the ListObjects request; for each inode, obtain metadata of the inode; return the metadata of the multi-level inodes corresponding to the bucket to a client according to a specified order, where during storing of the metadata of the multi-level inodes, the metadata of the multi-level inodes is stored according to the specified order; during obtaining of the metadata of the multi-level inodes corresponding to the bucket, the metadata of the multi-level inodes corresponding to the bucket is obtained according to the specified order, where the specified order includes a lexicographic order, and the lexicographic order is arranged in alphabetical order.

In an example, the obtaining module 61 is further configured to, in response to that a multipart upload request based on an object storage protocol is obtained, determine multi-level inodes based on the multipart upload request; for each inode, obtain metadata of the inode. The determining module 62 is further configured to, in response to that the inode is a last-level inode of the multi-level inodes, determine storage location information of to-be-stored data based on the metadata of the inode. And the storage module 63 is further configured to store a data block in the multipart upload request based on the storage location information of the to-be-stored data; where the to-be-stored data includes a plurality of parts, and each part includes at least one data block. The storage module 63 is further configured to, after storing the data block in the multipart upload request, add extended data in the metadata of the inode, where the extended data includes a part identification of a part to which the data block belongs, an overwrite identification of the part, a block identification of the data block, and a size of the data block, where the overwrite identification of the part indicates a number of repetitions of the part.

In an example, the obtaining module 61 is further configured to, in response to that a read request based on a distributed file storage protocol or a get request based on an object storage protocol is obtained, determine multi-level inodes based on the read request or the get request; for each inode, obtain metadata of the inode. The determining module 62 is further configured to, in response to that the inode is a last-level inode of the multi-level inodes, obtain a target part identification of a to-be-read part based on the read request or the get request; determine a maximum overwrite identification corresponding to the target part identification based on the metadata of the inode, determine target extended data corresponding to the target part identification and the maximum overwrite identification from the metadata of the inode, determine an offset address and a length of the to-be-read part based on a sorting position of the target extended data and sizes of data blocks in the target extended data, and determine storage location information corresponding to the to-be-read part based on the metadata of the inode, and obtain the to-be-read part based on the storage location information, the offset address and the length.

In an example, the obtaining module 61 is further configured to, in response to that a truncate operation request based on a distributed file storage protocol is obtained, determine multi-level inodes based on the truncate operation request; for each inode, obtain metadata of the inode. The determining module 62 is further configured to, in response to that the inode is a last-level inode of the multi-level inodes, determine extended data of a plurality of parts from the metadata of the inode, and sort the plurality of parts based on the extended data; determine a to-be-truncated part based on a sorting result and a truncate size in the truncate operation request; determine an offset address and a length of the to-be-truncated part based on a sorting position of extended data of the to-be-truncated part and a size of each data block in the to-be-truncated part; determine storage location information corresponding to the to-be-truncated part based on the metadata of the inode, and perform a clearing operation on the to-be-truncated part based on the storage location information, the offset address and the length.

In an example, the processing module is configured to, for each inode, when generating first metadata of a current version for the inode, generate a latest version identification for the first metadata, and add the latest version identification to the first metadata; in response to that the inode already corresponds to second metadata of a historical version, generate a snapshot identification for the second metadata, where the snapshot identification is a negative value, add the snapshot identification to the second metadata, generate an identification of a target version for the second metadata and add the identification of the target version to the second metadata; where the identification of the target version includes a first random character, a target ordered character and a second random character, the target ordered character is obtained by performing an encryption operation on an initial ordered character and the first random character, and the initial ordered character is obtained by operating on an initial ordered character of metadata of a previous version.

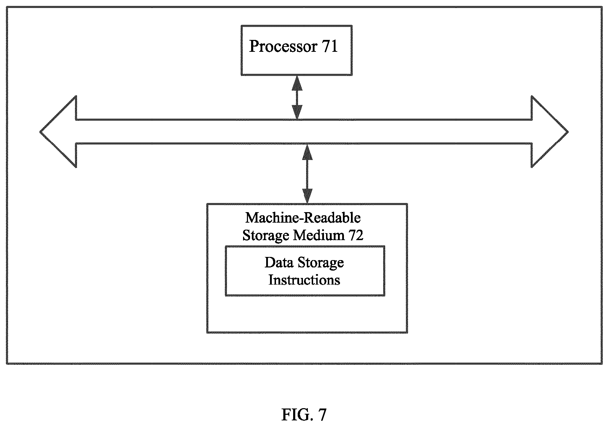

Based on the same application concept as the above method, an example of the present disclosure proposes an electronic device. As shown in FIG. 7, the electronic device includes a processor 71 and a machine-readable storage medium 72. The machine-readable storage medium 72 stores machine-executable instructions that can be executed by the processor 71. The processor 71 is configured to execute the machine-executable instructions to perform the data storage method provided in the above examples of the present disclosure.

Based on the same application concept as the above method, the example of the present disclosure further provides a machine-readable storage medium, on which a plurality of computer instructions are stored, and when the computer instructions are executed by a processor, the data storage method provided in the above example of the present disclosure can be realized.

The aforementioned machine-readable storage medium may be any electronic, magnetic, optical, or other physical storage apparatus that may contain or store information, such as executable instructions, data, etc. A machine-readable storage medium may be, for example, a Radom Access Memory (RAM), a volatile memory, a non-volatile memory, a flash memory, a storage drive (such as a hard drive) , a solid state disk, any type of storage disk (such as an optical disk, DVD, etc.) , or a similar storage medium, or a combination of them.

Based on the same application concept as the above method, the examples of the present disclosure further provide a computer program product, which may include a computer program. Where the computer program, when executed by a processor, causes the processor to perform the data storage method provided in the above examples of the present disclosure.

It should be understood by the skilled in the art, examples of the present disclosure may be provided as methods, systems, or computer program products. Accordingly, the present disclosure may take the form of an entirely hardware example, an entirely software example, or an example combining software and hardware aspects. Furthermore, that example of the present disclosure may take the form of a computer program product embody on one or more computer-usable storage media having computer-usable program code embodied therein (including, but not limit to, magnetic disk storage, CD - ROM, optical storage, etc.).

The above description is only an example of the present disclosure and is not intended to limit the present disclosure. It will be apparent to those skilled in the art that various modifications and variations of the present disclosure are possible. Any modifications, equivalents, improvements, etc., which are within the spirit and principles of the present disclosure are intended to be included within the scope of the claims of the present disclosure.

## Claims

1. A data storage method, wherein the method comprises:
obtaining a data storage request comprising directory information, wherein in a case that the data storage request is based on an object storage protocol, the directory information comprises a uniform resource locator; in a case that the data storage request is based on a distributed file storage protocol, the directory information comprises a file path;
determining a target index structure based on the directory information, wherein the target index structure comprises multi-level inodes corresponding to multi-level directories in the directory information; wherein for each inode, in response to that the inode is not a last-level inode of the multi-level inodes, metadata of the inode comprises storage location information of a next-level inode of the inode, and in response to that the inode is a last-level inode of the multi-level inodes, the metadata of the inode comprises storage location information of to-be-stored data;
for each inode, storing the metadata of the inode based on the storage location information of the inode; storing the to-be-stored data based on the storage location information of the to-be-stored data.

2. The method of claim 1, wherein in response to the directory information comprising a file path, the file path is divided into multi-level directories based on first delimiters in the file path;
or in response to the directory information comprising a uniform resource locator, the uniform resource locator is divided into multi-level directories based on second delimiters in the uniform resource locator, wherein characters behind each second delimiter in the uniform resource locator correspond to a directory.

3. The method of claim 1, wherein in response to that a uniform resource locator in a storage request of an object storage protocol corresponds to same multi-level directories as a file path in a storage request of a distributed file storage protocol, the uniform resource locator and the file path correspond to a same target index structure;
wherein the to-be-stored data is unstructured data; the object storage protocol comprises a simple storage service protocol, and the distributed file storage protocol comprises at least one of a network file system protocol, a common Internet file system protocol and a portable operating system interface of UNIX protocol.

4. The method of claim 1, wherein after the to-be-stored data is stored based on the storage location information of the to-be-stored data, the method further comprises:
obtaining a data read request comprising directory information; wherein in a case that the data read request is based on an object storage protocol, the directory information comprises a uniform resource locator; in a case that the data read request is based on a distributed file storage protocol, the directory information comprises a file path;
determining multi-level inodes corresponding to multi-level directories in the directory information;
for each inode, based on storage location information of the inode, reading metadata of the inode; in response to that the inode is not a last-level inode of the multi-level inodes, determining storage location information of a next-level inode of the inode based on the metadata of the inode; in response to that the inode is a last-level inode of the multi-level inodes, determining storage location information of stored data based on the metadata of the inode, and reading the stored data based on the storage location information.

5. The method of any one of claims 1 to 4, wherein the method further comprises:
in response to that an interface create request based on a distributed file storage protocol is obtained, adding a new inode in the target index structure based on the interface create request;
in response to that an interface delete request based on a distributed file storage protocol is obtained, deleting an existing inode from the target index structure based on the interface delete request;
in response to that a hard link interface request based on a distributed file storage protocol is obtained, adding a new inode in the target index structure, and pointing the new inode to an existing inode;
in response to that a soft link interface request based on a distributed file storage protocol is obtained, adding a new inode in the target index structure, wherein metadata of the new inode comprises a string pointing to an arbitrary path;
in response to that an interface write request based on a distributed file storage protocol is obtained, writing data to an offset address specified by an inode of the target index structure based on the interface write request;
in response to that an interface read request based on a distributed file storage protocol is obtained, reading data from an offset address specified by an inode of the target index structure based on the interface read request.

6. The method of any one of claims 1 to 4, wherein the method further comprises:
in response to that an interface read request based on an object storage protocol is obtained, determining multi-level inodes based on the interface read request; for each inode, obtaining metadata of the inode;
in response to that the inode is a last-level inode of the multi-level inodes, and that the interface read request is determined to be used for reading a hard link file based on the metadata of the inode, determining storage location information of stored data based on the metadata of the inode, and reading the stored data based on the storage location information; or
in response to that the interface read request is determined to be used for reading a soft link file based on the metadata of the inode, determining path information of the soft link file based on the metadata of the inode, and querying a new inode according to the path information of the soft link file, determining storage location information of stored data based on metadata of the new inode, and reading the stored data based on the storage location information.

7. The method of any one of claims 1 to 4, wherein the method further comprises:
in response to that a ListObjects request based on an object storage protocol is obtained, wherein the ListObjects request is used for listing all objects in a bucket, or the ListObjects request is used for filtering or grouping all objects in the bucket according to a prefix and a delimiter, determining multi-level inodes corresponding to the bucket based on the ListObjects request; for each inode, obtaining metadata of the inode;
returning the metadata of the multi-level inodes corresponding to the bucket to a client according to a specified order;
wherein during storing of the metadata of the multi-level inodes, the metadata of the multi-level inodes is stored according to the specified order; during obtaining of the metadata of the multi-level inodes corresponding to the bucket, the metadata of the multi-level inodes corresponding to the bucket is obtained according to the specified order;
wherein the specified order comprises a lexicographic order, and the lexicographic order is arranged in alphabetical order.

8. The method of any one of claims 1 to 4, wherein the method further comprises:
in response to that a multipart upload request based on an object storage protocol is obtained, determining multi-level inodes based on the multipart upload request; for each inode, obtaining metadata of the inode;
in response to that the inode is a last-level inode of the multi-level inodes, determining storage location information of to-be-stored data based on the metadata of the inode, and storing a data block in the multipart upload request based on the storage location information of the to-be-stored data; wherein the to-be-stored data comprises a plurality of parts, and each part comprises at least one data block;
after the data block in the multipart upload request is stored, adding extended data in the metadata of the inode, wherein the extended data comprises a part identification of a part to which the data block belongs, an overwrite identification of the part, a block identification of the data block, and a size of the data block;
wherein the overwrite identification of the part indicates a number of repetitions of the part.

9. The method of claim 8, wherein the method further comprises:
in response to that a read request based on a distributed file storage protocol or a get request based on an object storage protocol is obtained, determining multi-level inodes based on the read request or the get request; for each inode, obtaining metadata of the inode;
in response to that the inode is a last-level inode of the multi-level inodes, obtaining a target part identification of a to-be-read part based on the read request or the get request; determining a maximum overwrite identification corresponding to the target part identification based on the metadata of the inode, determining target extended data corresponding to the target part identification and the maximum overwrite identification from the metadata of the inode, determining an offset address and a length of the to-be-read part based on a sorting position of the target extended data and sizes of data blocks in the target extended data;
determining storage location information corresponding to the to-be-read part based on the metadata of the inode, and obtaining the to-be-read part based on the storage location information, the offset address and the length.

10. The method of claim 8, wherein the method further comprises:
in response to that a truncate operation request based on a distributed file storage protocol is obtained, determining multi-level inodes based on the truncate operation request; for each inode, obtaining metadata of the inode;
in response to that the inode is a last-level inode of the multi-level inodes, determining extended data of a plurality of parts from the metadata of the inode, and sorting the plurality of parts based on the extended data; determining a to-be-truncated part based on a sorting result and a truncate size in the truncate operation request;
determining an offset address and a length of the to-be-truncated part based on a sorting position of extended data of the to-be-truncated part and a size of each data block in the to-be-truncated part;
determining storage location information corresponding to the to-be-truncated part based on the metadata of the inode, and performing a clearing operation on the to-be-truncated part based on the storage location information, the offset address and the length.

11. The method of any one of claims 1 to 4, wherein the method further comprises:
for each inode, during generation of first metadata of a current version for the inode, generating a latest version identification for the first metadata, and adding the latest version identification to the first metadata;
in response to that the inode already corresponds to second metadata of a historical version, generating a snapshot identification for the second metadata, wherein the snapshot identification is a negative value, adding the snapshot identification to the second metadata, generating an identification of a target version for the second metadata and adding the identification of the target version to the second metadata;
wherein the identification of the target version comprises a first random character, a target ordered character and a second random character, the target ordered character is obtained by performing an encryption operation on an initial ordered character and the first random character, and the initial ordered character is obtained by operating on an initial ordered character of metadata of a previous version.

12. A data storage apparatus, wherein the apparatus comprises:
an obtaining module, which is to obtain a data storage request comprising directory information, wherein in a case that the data storage request is based on an object storage protocol, the directory information comprises a uniform resource locator; in a case that the data storage request is based on a distributed file storage protocol, the directory information comprises a file path;
a determining module, which is to determine a target index structure based on the directory information, wherein the target index structure comprises multi-level inodes corresponding to multi-level directories in the directory information, wherein for each inode, in response to that the inode is not a last-level inode of the multi-level inodes, metadata of the inode comprises storage location information of a next-level inode of the inode, and in response to that the inode is a last-level inode of the multi-level inodes, the metadata of the inode comprises storage location information of to-be-stored data;
a storage module, which is to, for each inode, store the metadata of the inode based on the storage location information of the inode; store the to-be-stored data based on the storage location information of the to-be-stored data.

13. The apparatus of claim 12, wherein
the obtaining module is further to, in response to the directory information comprising a file path, divide the file path into multi-level directories based on first delimiters in the file path;
in response to the directory information comprising a uniform resource locator, divide the uniform resource locator into multi-level directories based on second delimiters in the uniform resource locator, wherein characters behind each second delimiter in the uniform resource locator corresponds to a directory.

14. The apparatus of claim 12, wherein in response to that a uniform resource locator in a storage request of an object storage protocol corresponds to same multi-level directories as a file path in a storage request of a distributed file storage protocol, the uniform resource locator and the file path correspond to a same target index structure;
wherein the to-be-stored data is unstructured data; the object storage protocol comprises a simple storage service protocol, and the distributed file storage protocol comprises at least one of a network file system protocol, a common Internet file system protocol and a portable operating system interface of UNIX protocol.

15. The apparatus of claim 12, wherein the obtaining module is further to obtain a data read request comprising directory information, wherein in a case that the data read request is based on an object storage protocol, the directory information comprises a uniform resource locator; in a case that the data read request is based on a distributed file storage protocol, the directory information comprises a file path;
the determining module is further to determine multi-level inodes corresponding to multi-level directories in the directory information;
and the apparatus further comprises:
a processing module, which is to, for each inode, read metadata of the inode based on storage location information of the inode; in response to that the inode is not a last-level inode of the multi-level inodes, determine storage location information of a next-level inode of the inode based on the metadata of the inode; in response to that the inode is a last-level inode of the multi-level inodes, determine storage location information of stored data based on the metadata of the inode, and read the stored data based on the storage location information.

16. The apparatus of any one of claims 12 to 15, wherein
the obtaining module is further to, in response to that an interface create request based on a distributed file storage protocol is obtained, add a new inode in the target index structure based on the interface create request;
in response to that an interface delete request based on a distributed file storage protocol is obtained, delete an existing inode from the target index structure based on the interface delete request;
in response to that a hard link interface request based on a distributed file storage protocol is obtained, add a new inode in the target index structure, and point the new inode to an existing inode;
in response to that a soft link interface request based on a distributed file storage protocol is obtained, add a new inode in the target index structure, wherein metadata of the new inode comprises a string pointing to an arbitrary path;
in response to that an interface write request based on a distributed file storage protocol is obtained, write data to an offset address specified by an inode of the target index structure based on the interface write request;
in response to that an interface read request based on a distributed file storage protocol is obtained, read data from an offset address specified by an inode of the target index structure based on the interface read request.

17. The apparatus of any one of claims 12 to 15, wherein the obtaining module is further to, in response to that an interface read request based on an object storage protocol is obtained, determine multi-level inodes based on the interface read request; for each inode, obtain metadata of the inode;
the determining module is further to, in response to that the inode is a last-level inode of the multi-level inodes, and that the interface read request is determined to be used for reading a hard link file based on the metadata of the inode, determine storage location information of stored data based on the metadata of the inode, and read the stored data based on the storage location information; or in response to that the interface read request is determined to be used for reading a soft link file based on the metadata of the inode, determine path information of the soft link file based on the metadata of the inode, and query a new inode according to the path information of the soft link file, determine storage location information of stored data based on metadata of the new inode, and read the stored data based on the storage location information.

18. The apparatus of any one of claims 12 to 15, wherein the obtaining module is further to, in response to that a ListObjects request based on an object storage protocol is obtained, wherein the ListObjects request is used for listing all objects in a bucket, or the ListObjects request is used for filtering or grouping all objects in the bucket according to a prefix and a delimiter, determine multi-level inodes corresponding to the bucket based on the ListObjects request; for each inode, obtain metadata of the inode; return the metadata of the multi-level inodes corresponding to the bucket to a client according to a specified order;
wherein during storing of the metadata of the multi-level inodes, the metadata of the multi-level inodes is stored according to the specified order; during obtaining of the metadata of the multi-level inodes corresponding to the bucket, the metadata of the multi-level inodes corresponding to the bucket is obtained according to the specified order;
wherein the specified order comprises a lexicographic order, and the lexicographic order is arranged in alphabetical order.

19. The apparatus of any one of claims 12 to 15, wherein the obtaining module is further to, in response to that a multipart upload request based on an object storage protocol is obtained, determine multi-level inodes based on the multipart upload request; for each inode, obtain metadata of the inode;
the determining module is further to, in response to that the inode is a last-level inode of the multi-level inodes, determine storage location information of to-be-stored data based on the metadata of the inode;
the storage module is further to, store a data block in the multipart upload request based on the storage location information of the to-be-stored data; wherein the to-be-stored data comprises a plurality of parts, and each part comprises at least one data block;
the storage module is further to, after storing the data block in the multipart upload request, add extended data in the metadata of the inode, wherein the extended data comprises a part identification of a part to which the data block belongs, an overwrite identification of the part, a block identification of the data block, and a size of the data block; wherein the overwrite identification of the part indicates a number of repetitions of the part.

20. The apparatus of claim 19, wherein the obtaining module is further to, in response to that a read request based on a distributed file storage protocol or a get request based on an object storage protocol is obtained, determine multi-level inodes based on the read request or the get request; for each inode, obtain metadata of the inode;
the determining module is further to, in response to that the inode is a last-level inode of the multi-level inodes, obtain a target part identification of a to-be-read part based on the read request or the get request; determine a maximum overwrite identification corresponding to the target part identification based on the metadata of the inode, determine target extended data corresponding to the target part identification and the maximum overwrite identification from the metadata of the inode, determine an offset address and a length of the to-be-read part based on a sorting position of the target extended data and sizes of data blocks in the target extended data, and determine storage location information corresponding to the to-be-read part based on the metadata of the inode, and obtain the to-be-read part based on the storage location information, the offset address and the length.

21. The apparatus of claim 19, wherein the obtaining module is further to, in response to that a truncate operation request based on a distributed file storage protocol is obtained, determine multi-level inodes based on the truncate operation request; for each inode, obtain metadata of the inode;
the determining module is further to, in response to that the inode is a last-level inode of the multi-level inodes, determine extended data of a plurality of parts from the metadata of the inode, and sort the plurality of parts based on the extended data; determine a to-be-truncated part based on a sorting result and a truncate size in the truncate operation request; determine an offset address and a length of the to-be-truncated part based on a sorting position of extended data of the to-be-truncated part and a size of each data block in the to-be-truncated part; determine storage location information corresponding to the to-be-truncated part based on the metadata of the inode, and perform a clearing operation on the to-be-truncated part based on the storage location information, the offset address and the length.

22. The apparatus of any one of claims 12 to 15, wherein
a processing module, which is to, for each inode, during generating first metadata of a current version for the inode, generate a latest version identification for the first metadata, and add the latest version identification to the first metadata; in response to that the inode already corresponds to second metadata of a historical version, generate a snapshot identification for the second metadata, wherein the snapshot identification is a negative value, add the snapshot identification to the second metadata, generate an identification of a target version for the second metadata and add the identification of the target version to the second metadata;
wherein the identification of the target version comprises a first random character, a target ordered character and a second random character, the target ordered character is obtained by performing an encryption operation on an initial ordered character and the first random character, and the initial ordered character is obtained by operating on an initial ordered character of metadata of a previous version.

23. An electronic device, wherein the electronic device comprises: a processor and a machine-readable storage medium, wherein the machine-readable storage medium stores machine-executable instructions capable of being executed by the processor; the processor is to execute the machine-executable instructions to perform the method of any one of claims 1 to 11.
